# EUROPÄISCHE PATENTSCHRIFT

(11) **EP 1 959 065 B1**
(45) Veröffentlichungstag und Bekanntmachung des Hinweises auf die Patenterteilung: **15.04.2009**
(21) Anmeldenummer: 07003099.4
(22) Anmeldetag: 14.02.2007
(51) Int. Cl.: E04B 1/68, E06B 1/62

(54) **Dichtband für das Abdichten einer Fuge**
Sealing tape for sealing a groove
Bande étanche pour étanchéifier un joint

(43) Veröffentlichungstag der Anmeldung: 20.08.2008
(73) Patentinhaber: ISO-Chemie GmbH, 73431 Aalen (DE)
(72) Erfinder:
(74) Vertreter: Wächter, Jochen

(56) Entgegenhaltungen:
- EP-A- 1 131 525
- EP-A- 1 936 093
- DE-A1- 10 104 992
- US-A- 4 204 373

## Beschreibung

Die Erfindung bezieht sich auf ein Dichtband für das Abdichten einer Fuge, beispielsweise zwischen einem Rahmenprofil, etwa Fenster- oder Türrahmenprofil, und einer Gebäudewand, nach dem Oberbegriff des Anspruchs 1.

Ein solches Dichtband ist z.B. aus der EP 1 131 525 B1 bekannt. Das bekannte Dichtband besteht aus einem elastisch rückstellfähigen Schaumstoffstreifen rechteckigen Querschnitts, der in komprimiertem Zustand vollständig von einer Umhüllung umschlossen ist, die von einer Kunststofffolie gebildet ist, die eine in Längsrichtung des Dichtbandes verlaufende Reißlasche ausbildet, wozu die Kunststofffolie unter Bildung einer Sollreißstelle gegen sich selbst verhaftet ist. Zur Festlegung des Schaumstoffstreifens innerhalb der auf diese Weise gebildeten Tasche ist er mit der Umhüllung verklebt, und die Umhüllung ist ihrerseits mit gesonderten Klebemitteln, beispielsweise einem doppelseitig klebenden Band, an einem Rahmenprofil anheftbar.

Dichtbänder dieser Art werden an dem abzudichtenden Rahmenprofil angeklebt, und nach Montage des Rahmenprofils in einer Gebäudewandöffnung wird die Umhüllung aufgerissen, um es dem Schaumstoffstreifen zu ermöglichen, sich elastisch rückzustellen und damit das Rahmenprofil an der Gebäudewand abzudichten.

Bei den bekannten Dichtbändern verbleibt jedoch ein Teil des Umhüllungsmaterials nach dem Aufreißen desselben zwangsläufig am Bauwerk, insbesondere jener Teil, der sich zwischen dem Rahmenprofil und dem Schaumstoffstreifen befindet. Das ist oftmals unerwünscht.

Aus der EP 0 530 653 B1 ist eine Dichtleiste zum Ankleben an einem Fensterrahmen bekannt, die aus einem starren Kanal U-förmigen Querschnitts und einem darin angeordneten, elastisch komprimierten Schaumstoffstreifen besteht, der durch eine formstabile Deckleiste verschlossen ist, die randseitig in einer lösbaren Formschluss-Eingriffsverbindung zum Stirnbereich der Kanalwände gehalten ist. Die Deckleiste ist fahnenartig mit einem biegeschlaffen Streifenelement verbunden, das sich unter Führung über eine Randkante der Deckleiste hinweg in den Kanal der Dichtleiste hinein erstreckt. Durch Ziehen an dem Streifenelement lässt sich die Deckleiste von dem Kanal lösen, sodass sich der komprimierte Schaumstoffstreifen entspannen kann. Diese Konstruktion ist sehr aufwändig.

In der US 4 204 373 ist ein Dichtband beschrieben, das aus einer flachen Leiste zum Ankleben an ein Rahmenprofil und einem darauf angeordneten Schaumstoffstreifen besteht. Der Schaumstoffstreifen ist von einer Folie aus Papier oder Kunststoff abgedeckt, die an der flachen Leiste angeklebt ist und den Schaumstoffstreifen im komprimierten Zustand hält. Im Randstreifen der Abdeckfolie verlaufen Aufreißfäden, mit deren Hilfe die Folie nach Installation des mit dem Dichtband versehenen Rahmenprofils im Bauwerk aufgerissen werden kann.

Der Erfindung liegt die Aufgabe zugrunde, ein Dichtband der eingangs genannten Art anzugeben, das einfach aufgebaut ist und bei dem sich die Umhüllung entweder vollständig rückstandsfrei oder in einem vorbestimmten Umfang von dem Schaumstoffstreifen lösen lässt.

Diese Aufgabe wird durch ein Dichtband mit den Merkmalen des Anspruchs 1 gelöst.

Das erfindungsgemäße Dichtband weist einen elastisch rückstellfähigen Schaumstoffstreifen rechteckigen Querschnitts auf; eine folienhafte Umhüllung, die den Schaumstoffstreifen zumindest teilweise umgibt, den Schaumstoffstreifen dadurch in einem komprimierten Zustand hält und eine sich in Längsrichtung des Dichtbandes erstreckende Reißlasche zum Öffnen der Umhüllung aufweist, um eine Rückstellung des Schaumstoffstreifens zu ermöglichen, sowie ein Klebeband, das im Bereich einer Unterseite des Schaumstoffstreifens angeordnet ist. Außerdem umgibt die Umhüllung zwei Seitenflächen und eine Oberseite des Schaumstoffstreifens, weist einen ersten Randstreifen auf, der einen ersten Randbereich der Unterseite des Schaumstoffstreifens überdeckt, und weist einen zweiten Randstreifen auf, der einen dem ersten Randbereich gegenüberliegenden zweiten Randbereich der Unterseite des Schaumstoffstreifens überdeckt. Das Klebeband ist mit den beiden Randstreifen klebend, aber durch Zug ablösbar, verbunden und hält diese fest, und es haftet zumindest in einem Mittenbereich der Unterseite des Schaumstoffstreifens direkt an dem Schaumstoffstreifen.

Bei der vorliegenden Erfindung umgibt also die Umhüllung den Schaumstoffstreifen nicht vollständig, sondern lässt an der Unterseite des Schaumstoffstreifens einen streifenförmigen Mittenabschnitt frei, der vor Abziehen der Umhüllung mit dem Rahmenprofil zu verkleben ist. In diesem Bereich haftet das Klebeband direkt auf dem Schaumstoffstreifen. Außerdem hält das Klebeband die auf der Unterseite des Schaumstoffstreifens liegenden Randstreifen der Umhüllung fest, wodurch die Ausdehnung des Schaumstoffstreifens in diese Richtung verhindert wird. Im Gebrauch wird nach Anheften des Dichtbandes am Rahmenprofilelement, wozu das Klebeband vorzugsweise ein zweiseitig klebendes, d.h. auf zwei Seiten mit einer Klebschicht oder einem Klebstoff versehenes Band ist, die Umhüllung von dem Dichtband gelöst, indem an der Reißlasche gezogen wird, wodurch die von der Klebeschicht festgehaltenen Randstreifen der Umhüllung freigegeben werden, ohne dass Material zerreißt. Es löst sich lediglich die erwähnte Klebeverbindung, sodass eine vollständig rückstandsfreie Entnahme der Umhüllung möglich ist.

Vorteilhafte Ausgestaltungen der Erfindung sind Gegenstand der abhängigen Ansprüche.

Die Erfindung wird nachfolgend unter Bezugnahme auf in den Zeichnungen dargestellte Ausführungsformen näher erläutert.
- Fig. 1: ist eine Querschnittsansicht einer ersten Ausführungsform des erfindungsgemäßen Dichtbands zum Abdichten einer Fuge;
- Fig. 2: ist eine Querschnittsansicht einer zweiten Ausführungsform des erfindungsgemäßen Dichtbands zum Abdichten einer Fuge;
- Fig. 3: ist eine Querschnittsansicht einer dritten Ausführungsform des erfindungsgemäßen Dichtbands zum Abdichten einer Fuge;
- Fig. 4: ist eine Querschnittsansicht einer vierten Ausführungsform des erfindungsgemäßen Dichtbands zum Abdichten einer Fuge;
- Fig. 5: ist eine Querschnittsansicht einer fünften Ausführungsform des erfindungsgemäßen Dichtbands zum Abdichten einer Fuge;
- Fig. 6: ist eine Querschnittsansicht einer sechsten Ausführungsform des erfindungsgemäßen Dichtbands zum Abdichten einer Fuge; und
- Fig. 7: ist eine Querschnittsansicht einer siebten Ausführungsform des erfindungsgemäßen Dichtbands zum Abdichten einer Fuge.

In den Zeichnungen sind die Umhüllungen, Klebebänder bzw. Silikonpapiere teilweise in einem gewissen Abstand zum Schaumstoffkörper dargestellt, um die einzelnen Elemente, die das Dichtband bilden, klar voneinander abzuheben. In Wirklichkeit liegen diese Elemente jeweils eng aufeinander bzw. auf dem komprimierten Schaumstoffstreifen auf, da sich dieser unter dem von ihm erzeugten Druck an die Umhüllung eng anlegt.

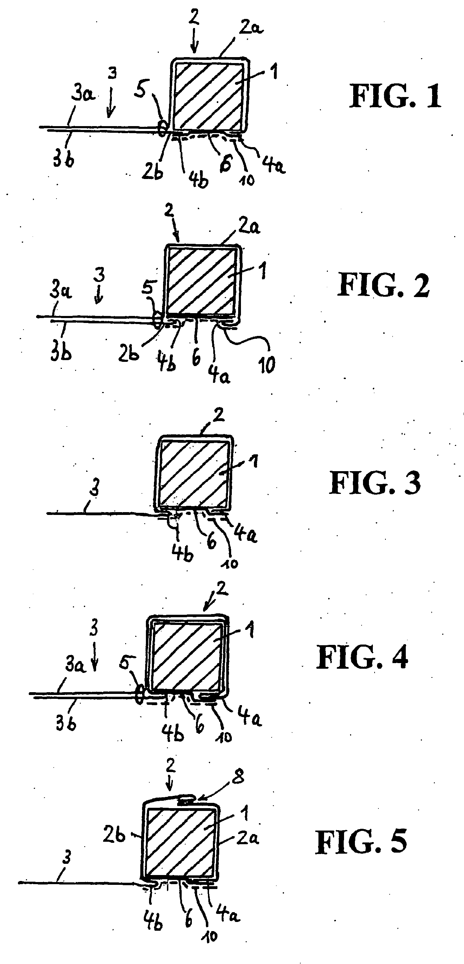

In Fig. 1 sieht man einen Schaumstoffstreifen 1, der im dargestellten Beispiel einen rechteckigen Querschnitt hat und der im komprimierten Zustand zusammen von einer insgesamt mit 2 bezeichneten Umhüllung und einem doppelseitig klebenden Klebeband 6 umgeben ist. Der Schaumstoffstreifen 1 kann aus jedem beliebigen offenzelligen oder geschlossenzelligen Weichschaumstoff gebildet sein, z.B. aus Polyurethan oder Polyethylen, und kann für eine verzögerte Rückstellung imprägniert sein. Eine mehrlagige Anordnung mehrerer aufeinander laminierter unterschiedlicher Schaumstoffmaterialien ist ebenso denkbar wie die Anordnung einer imprägnierten Schaumstoffschicht auf einer nicht imprägnierten Schaumstoffschicht.

Die Umhüllung 2 hat einen ersten Abschnitt 2a und einen zweiten Abschnitt 2b. Der erste Abschnitt 2a bedeckt im dargestellten Beispiel zwei Seitenflächen und die Oberseite des Schaumstoffstreifens 1 und ist mit einem ersten Randstreifen 4a auf einen Randbereich der Unterseite des Schaumstoffstreifens 1 umgeschlagen. Auf der entgegengesetzten Seite bildet ein von dem Schaumstoffstreifen 1 abstehender erster fahnenartiger Streifen 3a des ersten Abschnitts 2a der Umhüllung 2 einen Teil einer insgesamt mit 3 bezeichneten Reißlasche.

Der zweite Abschnitt 2b der Umhüllung 2 bedeckt den Schaumstoffstreifen 1 nur mit einem zweiten Randstreifen 4b am anderen Rand der Unterseite des Schaumstoffstreifens 1. Von dort erstreckt sich seitlich ein zweiter fahnenartiger Streifen 3b parallel zu dem schon genannten ersten fahnenartigen Streifen 3a und bildet einen weiteren Teil der Reißlasche 3. Die ersten und zweiten Abschnitte 2a und 2b der Umhüllung 2 sind nahe dem Schaumstoffstreifen 1 durch eine Nahtlinie zusammengehalten, die in Fig. 1 mit 5 symbolisiert ist und die eine Schweißnaht, Klebenaht oder Fadennaht sein kann.

Das schon erwähnte Klebeband 6, das dem Anbringen des Dichtbandes an einem einzubauenden Bauelement, etwa einem Rahmenprofil, dient, ist in einem Mittenbereich direkt an der Unterseite des Schaumstoffstreifens 1 befestigt. Die nach unten gewandte Außenseite des Klebebandes 6 ist vorzugsweise von einem gestrichelt dargestellten, abziehbaren Silikonpapier 10 oder dergleichen abgedeckt, solange das Dichtband nicht an dem Bauelement angebracht ist. Das Klebeband 6 überdeckt in seinen Randbereichen die auf der Unterseite des Schaumstoffstreifens 1 befindlichen Randstreifen 4a, 4b der Umhüllung 2 und hält diese fest. Die Klebeverbindung ist ausreichend fest, um der vom Schaumstoffstreifen 1 im komprimierten Zustand erzeugten Rückstellkraft zu widerstehen, ist aber andererseits schwach genug, einer Reißkraft nachzugeben, wenn nach dem Befestigen des Dichtbandes an einem Bauelement an der Reißlasche 3 gezogen wird. Die Randstreifen 4a, 4b können auch einen zickzackförmigen oder wellenförmigen Rand haben.

Es sei an dieser Stelle betont, dass in der Praxis das Klebeband 6 sehr häufig durch eine Klebeschicht realisiert ist, die an einem Silikonpapier oder dergleichen haftet und die in dieser Form auf ein Schaumstoffbahnmaterial aufkaschiert worden ist. Mitunter kann in dieser Klebeschicht noch ein Gittergewebe oder eine Trägerfolie, Vlies oder dergleichen zur Vergrößerung der Zugfestigkeit eingebettet sein. Der oben verwendete Ausdruck "Klebeband" soll daher auch Klebeschichten dieser hier beschriebenen Art umfassen.

Das erfindungsgemäße Dichtband einschließlich des Klebebandes 6 und des Silikonpapiers 10 wird üblicherweise breitflächig auf eine Rolle gewickelt und diese Dichtbandrolle anschließend zur weiteren Bearbeitung in Scheiben geschnitten. Die Aufbringung der Umhüllung erfolgt üblicherweise nach dem Abwickeln des Dichtbandes von der Rolle. Um den Schaumstoffstreifen dabei in der komprimierten Form zu halten, wird entweder die verzögerte Rückstelleigenschaft eines imprägnierten Schaumstoffs verwendet oder der Schaumstoff mechanisch niedergehalten. Anschließend wird das komprimierte Dichtband zusammen mit der Umhüllung aufgewickelt, z.B. auf eine Spule oder wieder zu einer Dichtbandrollenscheibe.

Fig. 2 zeigt eine zweite Ausführungsform des erfindungsgemäßen Dichtbands. Sie unterscheidet sich von der nach Fig. 1 dadurch, dass das Klebeband 6 über die gesamte Unterseite des Schaumstoffstreifens 1 direkt am Schaumstoffstreifen 1 befestigt ist und die Randstreifen 4a, 4b des ersten und zweiten Abschnitts 2a und 2b der Umhüllung 2 nach innen umgeschlagen sind und zwischen den Randbereichen des Klebebandes 6 und dem Silikonpapier 10 liegen. Das das Klebeband 6 abdeckende Silikonpapier 10 bedeckt in seinen Randbereichen die Randstreifen 4a, 4b der Umhüllung 2 und bildet dadurch jeweils Ablöselaschen, da es dort auf den Randstreifen 4a, 4b nur aufliegt, ohne damit verklebt zu sein. Somit ist das Ablösen des Silikonpapiers 10 von dem Klebeband 6 erleichtert, was die Handhabung des Dichtbandes vor dem Ankleben an ein Bauelement zusätzlich vereinfacht.

Die beiden Randstreifen 4a, 4b können bei dieser Ausführungsform natürlich auch wie in Fig. 1 gerade auf den Randbereich des Klebebandes 6 aufgebracht werden. Die Umfaltung der Randstreifen 4a, 4b hat jedoch den Vorteil, dass die Randstreifen 4a, 4b beim Ziehen von dem Klebeband 6 abgeschält werden können, wozu ein geringerer Kraftaufwand erforderlich ist.

Fig. 3 zeigt eine dritte Ausführungsform des erfindungsgemäßen Dichtbands, die sich von der nach Fig. 1 dadurch unterscheidet, dass die Umhüllung 2 einteilig ist und daher hier nur mit dem Bezugszeichen 2 ohne Suffixe versehen ist. Die Umhüllung 2 ist um beide Seitenflächen und die Oberseite des Schaumstoffstreifens 1 und mit dem ersten Randstreifen 4a wieder unter die Unterseite des Schaumstoffstreifens 1 geführt. Am gegenüberliegenden Rand der Unterseite des Schaumstoffstreifens 1 ist die Umhüllung 2 mit dem zweiten Randstreifen 4b unter den Schaumstoffstreifen 1 geführt und dann umgeschlagen, um eine vom Schaumstoffstreifen 1 abstehende Reißlasche 3 zu bilden. Die Unterseite des Schaumstoffstreifens 1 ist in einem Mittenbereich wieder von einem Klebeband 6 bedeckt, das sich von dort aus auch über den ersten Randstreifen 4a und den zweiten doppellagigen Randstreifen 4b erstreckt und diese klebend festhält, um dadurch den Schaumstoffstreifen 1 im komprimierten Zustand zu halten.

Will man bei dieser Ausführungsform der Erfindung die Umhüllung 2 lösen, muss man nur an der Reißlasche 3 ziehen, wodurch zunächst der Randstreifen 4b vom Klebeband 6 freigegeben wird und sich dann auch der Randstreifen 4a aus seiner Verbindung mit dem Klebeband 6 lösen lässt.

Auch bei der Ausführungsform nach Fig. 3 könnte vorteilhafterweise wie bei Fig. 2 das Klebeband 6 über die gesamte Unterseite des Schaumstoffstreifens 1 direkt an diesem befestigt sein, während die Randstreifen 4a, 4b zwischen dem Klebeband 6 und dem Silikonpapier 10 angeordnet sind. Dies gilt auch für alle folgenden Ausführungsformen.

Fig. 4 zeigt eine vierte Ausführungsform der Erfindung, die sich von der Ausführungsform nach Fig. 3 dadurch unterscheidet, dass die Umhüllung 2 am ersten Randstreifen 4a um 180° umgeschlagen und über die Oberseite des Schaumstoffstreifens 1 zurückgeführt ist und somit eine doppellagige Umhüllung bildet. Der zurückgeführte Abschnitt bildet einen fahnenartigen Streifen 3a und ist im Bereich des zweiten Randstreifens 4b mit dem sich von dort erstreckenden fahnenartigen Streifen 3b bei 5 verbunden, beispielsweise durch Verschweißung, Verklebung oder eine Fadennaht, wodurch die doppellagige Reißlasche 3 gebildet wird. Der Vorteil dieser Ausführungsform ist, dass die Umhüllung 2 einteilig gestaltet werden kann, wobei die Dicke des Umhüllungsmaterials verringert werden kann. Außerdem ist das Ablösen des Umhüllungsmaterials an dem ersten Randstreifen 4a erleichtert, weil nach dem Lösen der Umhüllung 2 die innere Lage des Randstreifens 4a das Abschälen des Materials an der Klebestelle erleichtert.

Fig. 5 zeigt eine fünfte Ausführungsform der Erfindung. Die Umhüllung 2 hat einen ersten Abschnitt 2a, der eine erste Seitenfläche des Schaumstoffstreifens 1 vollständig und dessen Oberseite etwa zur Hälfte bedeckt. Der erste Abschnitt 2a hat einen ersten Randstreifen 4a, der unter dem Schaumstoffstreifen 1 liegt. Auf den auf der Oberseite des Schaumstoffstreifens 1 liegenden Randbereich des ersten Abschnitts 2a ist ein Randbereich eines zweiten Abschnitts 2b an einer sich in Längsrichtung des Dichtbandes erstreckenden Klebstoffbahn 8 aufgeklebt und vorzugsweise umgefaltet. Dieser zweite Abschnitt 2b vervollständigt die Abdeckung der Oberseite des Schaumstoffstreifens 1. Weiterhin bedeckt er die andere Seitenfläche des Schaumstoffstreifens 1 und ist vergleichbar der Ausführungsform von Fig. 3 unter den Schaumstoffstreifen 1 geführt, wo sein Randstreifen 4b zusammen mit dem ersten Randstreifen 4a von dem Klebeband 6 bedeckt ist. Der zweite Abschnitt 2b der Umhüllung bildet zugleich eine seitlich vom Schaumstoffstreifen 1 abstehende Reißlasche 3.

Zum Lösen der Umhüllung muss man nur an der Reißlasche 3 ziehen. Die Klebeverbindung an dem unter dem Schaumstoffstreifen 1 liegenden Randstreifen 4b löst sich dadurch. Bei weiterem Ziehen an der Reißlasche 3 schält sich der zweite Abschnitt 2b der Umhüllung 2 von dem ersten Abschnitt 2a an der Klebstoffbahn 8 zwischen den beiden Abschnitten 2a und 2b der Umhüllung ab, sodass der zweite Abschnitt 2b der Umhüllung vollständig von dem Schaumstoffstreifen 1 gelöst werden kann und der erste Abschnitt 2a zurückbleibt. Dieser kann bei Einsatz geeigneten Umhüllungsmaterials für spezielle Schutzmaßnahmen einer Seitenfläche des Dichtbands verwendet werden, z.B. als Dampfsperre. Auch andere Funktionen des verbliebenen Teils der Umhüllung sind denkbar, so z.B. eine UV-Sperre zum Schutz des Schaumstoffstreifens 1 oder eine farbige Abdeckung aus Gestaltungsgründen am Bauwerk.

Alternativ zu der Verbindung der beiden Abschnitte 2a und 2b der Umhüllung 2 mittels der Klebstoffbahn 8 kann man auch die beiden Abschnitte 2a und 2b integral miteinander ausbilden, aber in dem Bereich, wo sich bei Fig. 5 die Klebstoffbahn 8 befindet, mit einer Reißperforation versehen. Nach dem Lösen des Randstreifens 4b durch Ziehen an der Reißlasche 3 zerreißt dann die Umhüllung 2 an der genannten Perforation, was den Abschnitt 2a ebenfalls an dem Dichtband zurücklässt.

Bei beiden letztgenannten Varianten kann ggf. das Klebeband 6 auch nur einseitig, d.h. auf der in der Zeichnung links dargestellten Seite, unter dem Randstreifen 4b liegen, der dann von dem Silikonpapier 10 abgedeckt ist, analog der Ausführungsform von Fig. 2, womit das Abziehen der Umhüllung 2 vom Dichtband erleichtert wird.

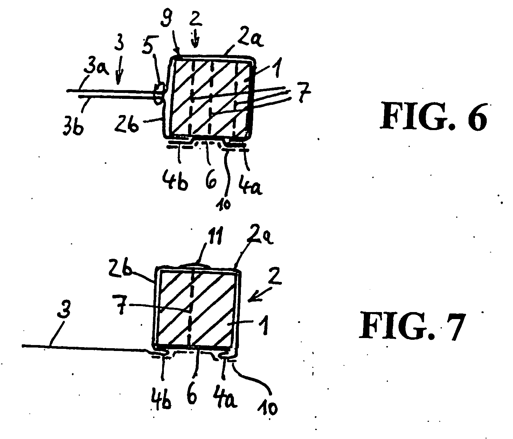

Fig. 6 zeigt eine sechste Ausführungsform des erfindungsgemäßen Dichtbands. Diese Variante unterscheidet sich von der nach Fig. 1 dadurch, dass der erste Abschnitt 2a der Umhüllung 2 die auf der Seite der Reißlasche 3 gelegene Seitenfläche des Schaumstoffstreifens 1 nur etwa zur Hälfte bedeckt und der zweite Abschnitt 2b der Umhüllung 2 die zweite Hälfte dieser Seitenfläche bedeckt und mit dem ersten Abschnitt 2a an einer Naht 5 verbunden ist, die etwa in halber Höhe des Schaumstoffstreifens 1 liegt. Die Handhabung zum Lösen der Umhüllung 2 vom Schaumstoffstreifen 1 ist vergleichbar der bei der Ausführungsform nach Fig. 1.

Man erkennt in Fig. 6 ein weiteres Merkmal, nämlich Nähte mit Fäden 7, die vorzugsweise in Längsrichtung des Schaumstoffstreifens 1 verlaufen und diesen von oben nach unten durchsetzen. Sie halten den Schaumstoffstreifen 1 im komprimierten Zustand zusammen und gewährleisten dadurch, dass der Schaumstoffstreifen 1 im komprimierten Zustand eine möglichst rechteckige Querschnittsgestalt hat. Außerdem wird die auf die Umhüllung 2 wirkende Kraft geringer, sodass diese dünner ausgebildet werden kann. Die aus den Fäden 7 bestehenden Nähte werden nach dem Öffnen der Umhüllung 2 gelöst, was bei Nähten dieser Art durch Ziehen an einem Fadenende sehr leicht möglich ist, sodass sich das Material des Schaumstoffstreifens 1 elastisch in seine Ursprungsgestalt rückstellen kann. Auch ein vorheriges Lösen der Fäden 7 beim Entfernen der Umhüllung 2 ist denkbar, wenn die Folie mit durchgenäht wurde. Die genannten Fäden 7 lassen sich auch bei den Ausführungsformen der Fig. 1 bis 5 verwenden. Es sind alle beliebigen Einfadennähte oder Zweifadennähte verwendbar.

In diesem Zusammenhang ist anzumerken, dass die in den Fig. 1 bis 5 ohne solche Fäden dargestellten Ausführungsformen in einer eher idealisierten Gestalt des Querschnitts des Schaumstoffstreifens 1 dargestellt sind. In Wirklichkeit sind nämlich die oberen Ränder des Schaumstoffstreifens 1 durch die Umhüllung 2 und den von innen wirkenden Druck mehr eingedrückt als die übrigen Flächen des Schaumstoffstreifens 1, sodass der Querschnitt des Schaumstoffstreifens 1 im komprimierten Zustand desselben eine vom Rechteck abweichende Gestalt annimmt. Auch im Mittenbereich an der Unterseite kann eine gewisse Auswölbung des Schaumstoffstreifens 1 erfolgen, sodass insgesamt eine Form entstehen kann, die einem Oval ähnelt.

Es sei an dieser Stelle betont, dass das Material der Umhüllung 2 ein Folienmaterial, ein Gittergewebe, Papier oder anderes Material sein kann, das für den genannten Einsatzzweck geeignet ist. Außerdem sind auch laminierte Folien verwendbar, die aus einer Kunststofffolie bestehen, die mit einem Trägermaterial (z.B. Vlies) laminiert ist, oder gewebeverstärkte Folien. All diese Materialien sind mit dem Ausdruck "folienhaft" umschrieben. Auch Kombinationen dieser Materialien sind möglich, insbesondere bei der Ausführungsform von Fig. 5.

Anhand von Fig. 6 soll zudem eine weitere Variante der Erfindung erläutert werden, die mit einem Schaumstoffstreifen 1 realisiert werden kann, der Nähte mit Fäden 7 aufweist oder auch nicht. Diese weitere Variante sieht vor, dass an der Oberseite des Dichtbandes vorzugsweise im Bereich der in Fig. 6 links oben gelegenen Ecke des Querschnitts des Schaumstoffstreifens 1 die Umhüllung eine längslaufende Perforationslinie 9 aufweist, die so dimensioniert ist, dass beim Ziehen an der Reißlasche 3 die Umhüllung 2 an der Perforationslinie 9 reißt, sodass der in Fig. 6 rechts davon befindliche Teil des Abschnitts 2a der Umhüllung 2 an dem Schaumstoffstreifen 1 zurückbleibt, während sich der andere Abschnitt 2b der Umhüllung 2 aus seiner Verklebung an der Unterseite des Schaumstoffstreifens 1 löst. Der am Schaumstoffstreifen 1 verbliebene Teil der Umhüllung 2 kann dann nach dem Entspannen des Schaumstoffstreifens 1 dessen eine Seitenfläche bedecken und dort wiederum z.B. als Dampfsperre usw. wirken.

In diesem Zusammenhang ist darauf hinzuweisen, dass in der Praxis die Schaumstoffstreifen 1 so komprimiert sind, dass sie beim Entspannen vorzugsweise bis auf etwa das Fünfbis Sechsfache ihrer im komprimierten Zustand eingenommenen Dicke expandieren können, wovon aber nur etwa die Hälfte ausgenutzt wird, um eine sichere Anlage an dem dem abzudichtenden Profilelement gegenüberliegenden Gebäudeteil zu gewährleisten. Beispielsweise wäre ein auf 10 mm komprimierter Schaumstoffstreifen von 20 mm Breite, der sich nach Aufreißen der Umhüllung 2 auf eine Höhe von knapp 30 mm entspannt hat, bei Realisierung der Variante der Erfindung mit der Perforationslinie 9 von dem an ihm verbliebenen Abschnitt 2b der Umhüllung 2 noch immer seitlich bedeckt.

Auch ohne Perforationslinie 9 ist es möglich (z.B. in der Ausführungsform nach Fig. 3), die ganze Umhüllung 2 nach dem Lösen lediglich des Randstreifens 4b (der Randstreifen 4a soll festgeklebt bleiben) am Schaumstoffstreifen 1 zu lassen, um die oben genannten Funktionen zu erfüllen. Ebenso kann die Umhüllung 2 vollständig vom Schaumstoffstreifen 1 entfernt werden und anschließend getrennt an dem abzudichtenden Objekt festgeklebt werden.

An der Unterseite der Reißlasche 3 kann in solchen Fällen ein Selbstklebestreifen (nicht dargestellt) aufgebracht sein, der mit einem Silikonpapier abgedeckt sein kann. Dies dient zur einfachen Befestigung der Reißlasche 3 an einem Objekt, beispielsweise dem Mauerwerk, oder an einem Fensterglas, wenn die Reißlasche 3 während des Transports eines in seinem Rahmen befindlichen Fensters als Kratzschutz für den Fensterrahmen dient.

Fig. 7 zeigt eine siebte Ausführungsform der Erfindung mit einer einteiligen Umhüllung 2, bei der der Schaumstoffstreifen 1 nicht nur durch die Umhüllung 2, sondern auch noch durch wenigstens eine Naht mit einem Faden 7 zusammengehalten ist, die im vorliegenden Falle durch die Umhüllung 2 hindurch genäht ist und auf ihrer Außenseite von einem einseitig klebenden Klebeband 11 überdeckt ist. Der Faden 7 der Naht, der das Schaumstoffmaterial durchquert, ist derart dimensioniert, dass er leicht zerrissen werden kann. Ein Faden, der die Schlingen des Fadens 7 an der Außenseite der Umhüllung 2 miteinander verkettet, ist so dimensioniert, dass er beim Abreißen der Umhüllung 2 von dem Dichtband nicht reißt.

Wenn man bei diesem an einem Bauelement mittels des Klebebandes 6 angebrachten Dichtband an der Reißlasche 3 zieht, löst sich zunächst der Randstreifen 4b aus seiner Verklebung mit dem Klebeband 6. Durch weiteres Ziehen gelingt es dann, den Faden 7 der Steppnaht zu zerreißen, sodass der Schaumstoffstreifen 1 sich rückzustellen beginnen kann. Weiteres Ziehen an der Reißlasche 3 hat zur Folge, dass auch der andere Randstreifen 4a aus seiner Verklebung gelöst wird, sodass die Umhüllung 2 vollständig von dem Dichtband getrennt ist und sich der Schaumstoffstreifen 1 ungehindert rückstellen, d.h. ausdehnen, kann. Das Klebeband 11 hält die zu beiden Seiten der Naht liegenden Abschnitte 2a und 2b der Umhüllung zusammen und bildet eine Verstärkung der an dieser Stelle durch die Nahtstiche etwas geschwächten Umhüllung 2. In einer anderen Variante kann das Klebeband 11 weggelassen werden.

Die Erfindung wurde vorstehend am Beispiel eines Schaumstoffstreifens 1 mit rechteckigem Querschnitt beschrieben, weil dieses die Erläuterung der Erfindung und ihrer Merkmale sehr erleichtert. Mit "rechteckig" soll auch "quadratisch" umfasst sein. Der Fachmann erkennt indessen, dass sich die Erfindung in entsprechender Weise auch mit Schaumstoffstreifen 1 realisieren lässt, die vom Rechteck abweichende Querschnitte haben. Die angegebene Querschnittsgestalt des Schaumstoffstreifens 1 soll daher nicht einschränkend verstanden werden, insbesondere können ursprünglich rechteckige Schaumstoffstreifen 1 aufgrund des Drucks durch die Umhüllung 2 nach einiger Zeit zu einer Art Oval gedrückt werden.

## Patentansprüche

1. Dichtband für das Abdichten einer Fuge zwischen einem Bauelement, insbesondere einem Rahmenprofil, etwa Fenster- oder Türrahmenprofil, und einem das Bauelement umgebenden Objekt, etwa einer Gebäudewand, mit
einem elastisch rückstellfähigen Schaumstoffstreifen (1) rechteckigen Querschnitts;
einer folienhaften Umhüllung (2), die den Schaumstoffstreifen (1) zumindest teilweise umgibt, den Schaumstoffstreifen (1) **dadurch** in einem komprimierten Zustand hält und eine sich in Längsrichtung des Dichtbandes erstreckende Reißlasche (3) zum Öffnen der Umhüllung (2) aufweist, um eine Rückstellung des Schaumstoffstreifens (1) zu ermöglichen; und
einem klebeband (6), das im Bereich einer Unterseite des Schaumstoffstreifens (1) angeordnet ist;
wobei die Umhüllung (2) zwei Seitenflächen und eine Oberseite des Schaumstoffstreifens (1) umgibt;
**dadurch gekennzeichnet, dass**
die Umhüllung (2) einen ersten Randstreifen (4a) aufweist, der einen ersten Randbereich der Unterseite des Schaumstoffstreifens (1) überdeckt, und einen zweiten Randstreifen (4b) aufweist, der einen dem ersten Randbereich gegenüberliegenden zweiten Randbereich der Unterseite des Schaumstoffstreifens (1) überdeckt; und
das Klebeband (6) mit den beiden Randstreifen (4a, 4b) klebend, aber durch Zug ablösbar, verbunden ist und diese festhält, und das Klebeband (6) zumindest in einem Mittenbereich der Unterseite des Schaumstoffstreifens (1) direkt an dem Schaumstoffstreifen (1) haftet.

2. Dichtband nach Anspruch 1, **dadurch gekennzeichnet, dass** die Umhüllung (2) zweiteilig ausgebildet ist und zwei gesonderte Abschnitte (2a, 2b) aufweist.

3. Dichtband nach Anspruch 2, **dadurch gekennzeichnet, dass** der erste Abschnitt (2a) beide Seitenflächen und die Oberseite des Schaumstoffstreifens (1) wenigstens teilweise bedeckt, und der zweite Abschnitt (2b) mittels des zweiten Randstreifens (4b) den zweiten Randbereich der Unterseite des Schaumstoffstreifens (1) überdeckt.

4. Dichtband nach Anspruch 3, **dadurch gekennzeichnet, dass** der erste Abschnitt (2a) und der zweite Abschnitt (2b) jeweils einen fahnenartigen Streifen (3a, 3b) aufweist, der von dem Schaumstoffstreifen (1) absteht und an der Bildung der Reißlasche (3) beteiligt ist, und die beiden fahnenartigen Streifen (3a, - 3b) an einer dem Schaumstoffstreifen (1) eng benachbarten Nahtlinie (5) verschweißt, verklebt oder vernäht sind.

5. Dichtband nach Anspruch 2, **dadurch gekennzeichnet, dass** die Umhüllung (2) auf der Oberseite des Schaumstoffstreifens (1) eine ablösbare, streifenförmig in Längsrichtung des Dichtbands verlaufende Klebestelle (8) aufweist, an der beide Abschnitte (2a, 2b) der Umhüllung (2) miteinander lösbar verklebt sind.

6. Dichtband nach einem der vorangehenden Ansprüche, **dadurch gekennzeichnet, dass** der zweite Randstreifen (4b) umgefaltet ist.

7. Dichtband nach Anspruch 1, **dadurch gekennzeichnet, dass** die Umhüllung (2) einteilig ausgebildet ist und der zweite Randstreifen (4b) umgefaltet und zur Bildung der Reißlasche (3) verlängert ist.

8. Dichtband nach Anspruch 7, **dadurch gekennzeichnet, dass** die Umhüllung (2) doppellagig ausgebildet ist und zwei fahnenartige Streifen (3a, 3b) aufweist, die an einer dem Schaumstoffstreifen (1) eng benachbarten Nahtlinie (5) verschweißt, verklebt oder vernäht sind.

9. Dichtband nach einem der vorangehenden Ansprüche, **dadurch gekennzeichnet, dass** der erste Randstreifen (4a) umgefaltet ist.

10. Dichtband nach einem der vorangehenden Ansprüche, **dadurch gekennzeichnet, dass** die Umhüllung (2) im Bereich der Oberseite des Schaumstoffstreifens (1) mit einer in Längsrichtung des Dichtbands verlaufenden Perforationslinie (9) versehen ist.

11. Dichtband nach einem der vorhergehenden Ansprüche, **dadurch gekennzeichnet, dass** der Schaumstoffstreifen (1) unter der Umhüllung (8) durch wenigstens eine in Längsrichtung des Dichtbands verlaufende, lösbare Naht im komprimierten Zustand gehalten ist.

12. Dichtband nach Anspruch 11, **dadurch gekennzeichnet, dass** der Faden (7) der Naht auch die Umhüllung (2) durchdringt.

13. Dichtband nach Anspruch 12, **dadurch gekennzeichnet, dass** die Umhüllung (2) über der Naht von einem Klebeband (11) bedeckt ist.

14. Dichtband nach einem der vorhergehenden Ansprüche, **dadurch gekennzeichnet, dass** die Umhüllung (2) wenigstens teilweise von einem Gittergewebe gebildet ist.

15. Dichtband nach einem der vorhergehenden Ansprüche, **dadurch gekennzeichnet, dass** das Klebeband (6) von einem Silikonpapier (10) überdeckt ist.

16. Dichtband nach Anspruch 15, **dadurch gekennzeichnet, dass** das Klebeband (6) direkt an der gesamten Unterseite des Schaumstoffstreifens (1) haftet und die Randstreifen (4a, 4b) der Umhüllung (2) zwischen dem Klebeband (6) und den Randbereichen des Silikonpapiers (10) angeordnet sind.

## Claims

1. Sealing tape for sealing a gap between one component, in particular a frame profile, for example window frame or door frame profile, and an object surrounding the component, for example a building wall, having a resiliently resettable foam strip (1) of rectangular cross-section; a film-like cover (2) which at least partly surrounds the foam strip (1), thus holds the foam strip (1) in a compressed state and has a tear-off tab (3) extending in longitudinal direction of the sealing tape to open the cover (2) in order to facilitate resetting of the foam strip (1); and an adhesive tape (6) which is arranged in the region of an underside of the foam strip (1); wherein the cover (2) surrounds two side surfaces and one upper side of the foam strip (1); **characterised in that** the cover (2) has a first edge strip (4a), which covers a first edge region of the underside of the foam strip (1), and has a second edge strip (4b), which covers a second edge region of the underside of the foam strip (1) which is opposite the first edge region; and the adhesive tape (6) is joined to the two edge strips (4a, 4b) in adhering manner, but being releasable by pulling, and fixes the latter, and the adhesive tape (6) adheres directly to the foam strip (1) at least in a central region of the underside of the foam strip (1).

2. Sealing tape according to claim 1, **characterised in that** the cover (2) is designed to have two parts and has two separate sections (2a, 2b).

3. Sealing tape according to claim 2, **characterised in that** the first section (2a) covers both side surfaces and the upper side of the foam strip (1) at least partly, and the second section (2b) covers the second edge region of the underside of the foam strip (1) by means of the second edge strip (4b).

4. Sealing tape according to claim 3, **characterised in that** the first section (2a) and the second section (2b) has in each case a lug-like strip (3a, 3b), which projects from the foam strip (1) and participates in the formation of the tear-off tab (3), and the two lug-like strips (3a, 3b) are welded, adhered or stitched at a seam line (5) closely adjacent the foam strip (1).

5. Sealing tape according to claim 2, **characterised in that** the cover (2) has on the upper side of the foam strip (1), a releasable adhesive point (8) running like a strip in longitudinal direction of the sealing tape, to which adhesive point (8) both sections (2a, 2b) of the cover (2) are adhered releasably to one another.

6. Sealing tape according to one of the preceding claims, **characterised in that** the second edge strip (4b) is folded over.

7. Sealing tape according to claim 1, **characterised in that** the cover (2) is designed to have one part and the second edge strip (4b) is folded over and extended to form the tear-off tab (3).

8. Sealing tape according to claim 7, **characterised in that** the cover (2) is designed to be double-layered and has two lug-like strips (3a, 3b), which are welded, adhered or stitched at a seam line (5) closely adjacent the foam strip (1).

9. Sealing tape according to one of the preceding claims, **characterised in that** the first edge strip (4a) is folded over.

10. Sealing tape according to one of the preceding claims, **characterised in that** the cover (2) is provided with a perforation line (9) running in longitudinal direction of the sealing tape in the region of the upper side of the foam strip (1).

11. Sealing tape according to one of the preceding claims, **characterised in that** the foam strip (1) is held in the compressed state below the cover (8) by at least one releasable seam running in longitudinal direction of the sealing tape.

12. Sealing tape according to claim 11, **characterised in that** the thread (7) of the seam also penetrates the cover (2).

13. Sealing tape according to claim 12, **characterised in that** the cover (2) over the seam is covered by an adhesive tape (11).

14. Sealing tape according to one of the preceding claims, **characterised in that** the cover (2) is formed at least partly by a lattice fabric.

15. Sealing tape according to one of the preceding claims, **characterised in that** the adhesive tape (6) is covered by a silicone paper (10).

16. Sealing tape according to claim 15, **characterised in that** the adhesive tape (6) adheres directly to the entire underside of the foam strip (1) and the edge strips (4a, 4b) of the cover (2) are arranged between the adhesive tape (6) and the edge regions of the silicone paper (10).

## Revendications

1. Bande étanche pour l'étanchéité d'un joint entre un élément de construction, en particulier un profilé de cadre, par exemple un profilé de cadre de porte ou de vantail de fenêtre, et un objet entourant l'objet, par exemple une paroi d'immeuble, comprenant
une bande de mousse (1) de section transversale rectangulaire, susceptible de reprise élastique ;
un gainage (2) adhésif en feuille, qui entoure au moins en partie la bande de mousse (1), maintient de ce fait la bande de mousse (1) dans un état de compression et présente une patte de rupture (3), s'étendant dans la direction longitudinale de la bande étanche, pour l'ouverture du gainage (2), afin de permettre un retour à la position initiale de la bande de mousse (1) ; et
un ruban adhésif (6), disposé dans la zone d'un côté inférieur de la bande de mousse (1) ;
le gainage (2) entourant deux faces latérales et un côté supérieur de la bande de mousse (1) ;
**caractérisée en ce que**
le gainage (2) présente un premier ruban de bordure (4a), qui recouvre une première zone de bordure du côté inférieur de la bande de mousse (1), et un second ruban de bordure (4b), qui recouvre une seconde zone de bordure, en vis-à-vis de la première, du côté inférieur de la bande de mousse (1) ; et
le ruban adhésif (6) est assemblé collant avec les deux rubans de bordure (4a, 4b), mais avec une possibilité de détachement par traction, et maintient ces rubans de bordure, et le ruban adhésif (6) adhère directement sur la bande de mousse (1), au moins dans une zone centrale du côté inférieur de la bande (1).

2. Bande étanche suivant la revendication 1, **caractérisée en ce que** le gainage (2) est réalisé en deux parties et présente deux sections (2a, 2b) séparées.

3. Bande étanche suivant la revendication 2, **caractérisée en ce que** la première section (2a) recouvre au moins en partie les deux faces latérales et le côté supérieur de la bande de mousse (1), et la seconde section (2b) recouvre, au moyen du second ruban de bordure (4b), la seconde zone de bordure du côté inférieur de la bande de mousse (1).

4. Bande étanche suivant la revendication 3, **caractérisée en ce que** la première section (2a) et la seconde section (2b) présentent respectivement un ruban (3a, 3b) en forme de drapeau, qui dépasse de la bande de mousse (1) et participe à la formation de la patte de rupture (3), et les deux rubans (3a, 3b) en forme de drapeau sont soudés, collés ou cousus sur une ligne de joint (5) étroitement voisine de la bande de mousse (1).

5. Bande étanche suivant la revendication 2, **caractérisée en ce que** le gainage (2) présente sur le côté supérieur de la bande de mousse (1) un point de collage (8) détachable, s'étendant en forme de ruban dans la direction longitudinale de la bande étanche, point sur lequel sont collées entre elles, avec une possibilité de détachement, les deux sections (2a, 2b) du gainage (2).

6. Bande étanche suivant l'une des revendications précédentes, **caractérisée en ce que** le second ruban de bordure (4b) est replié.

7. Bande étanche suivant la revendication 1, **caractérisée en ce que** le gainage (2) a une réalisation monobloc et le second ruban de bordure (4b) est replié et prolongé pour former la patte de rupture (3).

8. Bande étanche suivant la revendication 7, **caractérisée en ce que** le gainage (2) a une réalisation bicouche et présente deux rubans (3a, 3b) en forme de drapeau, qui sont soudés, collés ou cousus sur une ligne de joint (5) étroitement voisine de la bande de mousse (1).

9. Bande étanche suivant l'une des revendications précédentes, **caractérisée en ce que** le premier ruban de bordure (4a) est replié.

10. brande étanche suivant l'une des revendications précédentes, **caractérisée en ce que** le gainage (2) est muni, dans la zone du côté supérieur de la bande de mousse (1), d'une ligne de perforation (9) s'étendant dans la direction longitudinale de la bande étanche.

11. Bande étanche suivant l'une des revendications précédentes, **caractérisée en ce que** la bande de mousse (1) est maintenue dans l'état de compression, au-dessous du gainage (2), par au moins un joint détachable, s'étendant dans la direction longitudinale de la bande étanche.

12. Bande étanche suivant la revendication 11, **caractérisée en ce que** le fil (7) du joint pénètre également au travers du gainage (2).

13. Bande étanche suivant la revendication 12, **caractérisée en ce que** le gainage (2) est recouvert au-dessus du joint par un ruban adhésif (11).

14. Bande étanche suivant l'une des revendications précédentes, **caractérisée en ce que** le gainage (2) est formé, au moins en partie, par un tissu en treillis.

15. brande étanche suivant l'une des revendications précédentes, **caractérisée en ce que** le ruban adhésif (6) est recouvert d'un papier siliconé (10).

16. Bande étanche suivant la revendication 15, **caractérisée en ce que** le ruban adhésif (6) adhère directement sur la totalité du côté inférieur de la bande de mousse (1) et les rubans de bordure (4a, 4b) du gainage (2) sont disposés entre le ruban adhésif (6) et les zones de bordure du papier siliconé (10).
